# EUROPEAN PATENT APPLICATION

(11) **EP 4 518 344 A1**
(43) Date of publication of application: **05.03.2025**
(21) Application number: 23807036.1
(22) Date of filing: 18.05.2023
(51) Int. Cl.: H04Q 11/00, H04J 14/02

(54) **METHOD FOR ESTABLISHING OPTICAL PATH, AND RELATED DEVICE**

(30) Priority: 18.05.2022 CN 202210542499
(71) Applicant: Huawei Technologies Co., Ltd., Shenzhen, Guangdong 518129 (CN)
(72) Inventor: ZHOU, Chao, Shenzhen, Guangdong 518129 (CN); XU, Shiping, Shenzhen, Guangdong 518129 (CN); CHEN, Junjie, Shenzhen, Guangdong 518129 (CN)
(74) Representative: Gill Jennings & Every LLP
(86) International application number: PCT/CN2023/095073
(87) International publication number: WO 2023/222086

(57) **Abstract**

This application provides an optical path establishment method, applied to an optical network. The optical network includes an optical network controller and an optical network switching device. The optical network switching device is configured to exchange data between compute nodes in a cluster. The method includes: The optical network controller obtains a topology structure of a subnet of the cluster, where the topology structure records an address of the compute node in the subnet. The optical network controller determines a wavelength division configuration based on the topology structure, where the wavelength division configuration is used to allocate different wavelengths to the compute nodes in the subnet; and then provides the wavelength division configuration for the optical network switching device. Then the optical network switching device establishes an optical path between the optical network switching device and the compute node in the subnet based on the wavelength division configuration. **In** this way, the optical network switching device can distinguish between optical signals based on the wavelengths, and directly transmit the optical signal to the compute node through the optical path, to avoid a congestion problem caused by burst traffic and shorten long-tail latency.

## Description

This application claims priority to Chinese Patent Application No. 202210542499.3, filed with the China National Intellectual Property Administration on May 18, 2022 and entitled "OPTICAL PATH ESTABLISHMENT METHOD AND RELATED DEVICE", which is incorporated herein by reference in its entirety.

### TECHNICAL FIELD

This application relates to the field of computer technologies, and in particular, to an optical path establishment method and system, an optical network controller, an optical network switching device, a computer-readable storage medium, and a computer program product.

### BACKGROUND

With continuous development of computer technologies, various computing architectures emerge. A data driven computing architecture (Data Driven Architecture), also referred to as a memory centric computing architecture (Memory Centric Architecture) or a hierarchical shared memory (Disaggregated Shared Memory) architecture, is an architecture-level innovation in a computing industry, and is also a hot topic of technical researches in the industry.

The data driven computing architecture constructs a memory interconnection network (memory fabric) cluster based on new memory semantic networks such as a compute express link (compute express link, CXL) memory semantic network, a coherent accelerator processor interface (coherent accelerator processor interface, CAPI) memory semantic network, or a GenZ memory semantic network, to implement hierarchical memory resource pooling and global sharing.

The memory interconnection network cluster requires efficient, stable, and reliable cross-node memory access. Specifically, the memory interconnection network cluster usually requires an ultra-high bandwidth (at a Tbps level) and ultra-low average latency and long-tail latency (<1 µs, at a hundred nanosecond level). For example, the bandwidth may be at a terabits per second (Terabits Per Second, TbPS) level, and the average latency or the long-tail latency may be at the hundred nanosecond level, where the hundred nanosecond level means being less than 1 microsecond (microsecond, µs).

Currently, the memory interconnection network cluster is usually established in a OneHop (OneHop) networking manner. The OneHop networking is a networking manner in which compute nodes are connected to a same switching device such as a switch (switch), so that the compute nodes exchange data via the switch.

However, in the OneHop networking manner, when burst traffic is generated on the compute nodes, short-term congestion is easily triggered, causing a sharp increase of the long-tail latency. Consequently, performance of the memory interconnection network cluster is restricted.

### SUMMARY

This application provides an optical path establishment method. According to the method, wavelengths are divided, so that different optical paths are established between an optical network switching device and compute nodes in a subnet of a memory interconnection network cluster, to enable the optical network switching device to distinguish between optical signals based on the wavelengths, and select a corresponding optical path based on the wavelength of the optical signal to directly transmit the optical signal to the compute node. This avoids a congestion problem caused by burst traffic, shortens long-tail latency, and ensures performance of the memory interconnection network cluster. This application further provides a corresponding system, optical network controller, optical network switching device, computer-readable storage medium, and computer program product.

According to a first aspect, this application provides an optical path establishment method. The method is applied to an optical network. The optical network is specifically an optical transport network, for example, a network that transmits an optical signal through an optical cross connection. The optical network includes an optical network controller and an optical network switching device. The optical network switching device is configured to exchange data between compute nodes in a cluster (to be specific, the foregoing memory interconnection network cluster).

Specifically, the optical network controller obtains a topology structure of a subnet of the cluster, where the topology structure records an address of the compute node in the subnet. The optical network controller determines a wavelength division configuration based on the topology structure, and provides the wavelength division configuration for the optical network switching device, where the wavelength division configuration is used to allocate different wavelengths to the compute nodes in the subnet. Correspondingly, the optical network switching device establishes an optical path between the optical network switching device and the compute node in the subnet based on the wavelength division configuration.

In the method, optical paths between the optical network switching device and the different compute nodes in the subnet are established based on the wavelength division configuration, so that the optical network switching device can distinguish between optical signals based on the wavelengths, and select a corresponding path based on the wavelength of the optical signal to directly transmit the optical signal to the compute node. This avoids a congestion problem caused by burst traffic, shortens long-tail latency, and ensures performance of the cluster.

In some possible implementations, the subnet includes N compute nodes, where N is greater than 1. For a target compute node in the N compute nodes, the optical network controller may determine a sub-range from a wavelength range (a range of wavelengths that can be used, for example, a wavelength range of visible light), and sample N-1 wavelengths from the sub-range, where the target compute node may be any compute node in the N compute nodes. Then the optical network controller determines the wavelength division configuration based on addresses of N-1 compute nodes other than the target compute node in the subnet, the N-1 wavelengths, egress ports that are of the optical network switching device and that are connected to the N-1 compute nodes, and an ingress port that is of the optical network switching device and that is connected to the target compute node. The wavelength division configuration may be specifically a correspondence between the address of the compute node in the subnet, a wavelength (a wavelength obtained through sampling from the sub-range) of an optical signal that is allowed to be received by the compute node in the subnet, and the ingress port and the egress port of the optical network switching device.

In the method, the optical network controller determines the sub-range from the wavelength range, samples several wavelengths from the sub-range, and determines the wavelength division configuration based on the sampled wavelength, the address of the compute node in the subnet, and the ingress port and the egress port of the optical network switching device, to implement fine-grained wavelength division. In this way, an optical signal received by the ingress port can be directly transmitted from a corresponding egress port to the compute node through a corresponding optical path based on a wavelength of the optical signal, and complex path calculation does not need to be performed. This shortens latency, improves transmission efficiency, and ensures the performance of the cluster.

In some possible implementations, the optical network controller may sample the N-1 wavelengths from the sub-range in a random sampling manner or an average sampling manner. The N-1 wavelengths may be allocated to the N-1 compute nodes other than the target compute node in the subnet. In the average sampling manner, wavelength spacing can be uniform. This avoids signal interference generated because wavelengths are excessively close to each other. In the random sampling manner, wavelengths can be irregular. This increases complexity of the optical path and ensures security.

In some possible implementations, the optical network switching device is an optical cross-connect switch, and the optical cross-connect switch includes a wavelength selective switch. Correspondingly, when establishing the optical path, the optical network switching device may establish the optical path between the optical network switching device and the compute node in the subnet by using the wavelength selective switch and based on the wavelength division configuration.

In the method, the optical network switching device may automatically adjust the optical path by using the wavelength selective switch and based on the wavelength division configuration, so that the optical signal can be automatically transmitted, after reaching the optical network switching device, to a corresponding compute node through the optical path, and a complex physical connection on a port does not need to be performed in advance. This further simplifies a networking manner and improves user experience in addition to solving the congestion problem.

In some possible implementations, an optical network adaptation device is configured for the compute node in the subnet, and the optical network adaptation device is configured to access the optical network. Correspondingly, the optical network controller may further provide the wavelength division configuration for the optical network adaptation device, to enable the optical network adaptation device to convert an electrical signal into an optical signal with a corresponding wavelength based on the wavelength division configuration.

In this way, when data is exchanged between the compute nodes in the subnet, the electrical signal may be converted into the optical signal with the corresponding wavelength, and then the optical network switching device directly transmits the optical signal with the wavelength to the compute node through a corresponding optical path. This improves the transmission efficiency, shortens the latency, and ensures the performance of the cluster.

In some possible implementations, the subnet includes a first compute node and a second compute node. An optical network adaptation device configured for the first compute node may convert, based on the wavelength division configuration, an electrical signal to be sent to the second compute node into an optical signal with a corresponding wavelength, and send the optical signal to the optical network switching device. Then, the optical network switching device transmits the optical signal to the second compute node through an optical path between the optical network switching device and the second compute node.

This implements high-speed communication between the compute nodes in the subnet, avoids the congestion problem caused by the burst traffic, shortens the long-tail latency, ensures the performance of the cluster, and improves job execution efficiency.

In some possible implementations, the optical network controller may provide first configuration information in the wavelength division configuration for the optical network switching device, and provide second configuration information in the wavelength division configuration for the optical network adaptation device. The first configuration information includes a correspondence between the wavelength of the optical signal that is allowed to be received by the compute node in the subnet and the ingress port and the egress port of the optical network switching device, and the second configuration information includes a correspondence between the address of the compute node in the subnet and the wavelength of the optical signal that is allowed to be received by the compute node in the subnet. This can reduce transmission overheads and costs.

In some possible implementations, the optical network controller may provide a complete wavelength division configuration for the optical network switching device and the optical network adaptation device in a unified manner. For example, the optical network controller may provide the optical network switching device and the optical network adaptation device with the correspondence between the address of the compute node in the subnet, the wavelength of the optical signal that is allowed to be received by the compute node in the subnet, and the ingress port and the egress port of the optical network switching device. This can reduce complex operations and a calculation amount on an optical network controller side, and even an optical network controller with a low configuration can meet a requirement.

In some possible implementations, the cluster may be a high-performance computing cluster. The high-performance computing cluster is configured with a job scheduler. The job scheduler may generate the topology structure of the subnet according to a scheduling policy, and the optical network controller may receive the topology structure that is of the subnet and that is generated by the job scheduler according to the scheduling policy. For example, the optical network controller may provide a northbound application programming interface, and the job scheduler may invoke the northbound application programming interface to deliver the topology structure of the subnet to the optical network controller.

In this way, a job may be scheduled to a compute node in a subnet of the high-performance computing cluster for execution, to fully utilize resources of the high-performance computing cluster and improve resource utilization.

In some possible implementations, the optical network controller may be further connected to a cloud platform. Specifically, the optical network controller may receive the topology structure that is of the subnet of the cluster and that is sent by infrastructure as a service IaaS layer network management of the cloud platform. In this way, cloudification scheduling of the high-performance computing cluster can be implemented, to further improve the resource utilization and reduce the costs. In addition, an overall architecture of a bottom layer of the optical network does not need to be changed, and only a small amount of adaptation needs to be added to the IaaS layer network management, for example, adaptation to a northbound application programming interface of the optical network controller, so that the optical network controller can be smoothly connected to an IaaS network service layer of the cloud platform such as a public cloud/hybrid cloud.

In some possible implementations, the optical network includes a plurality of optical network switching devices, and the optical network controller provides the wavelength division configuration for the plurality of optical network switching devices. This avoids service unavailability caused by a single point of failure of the optical network switching device, and improves availability of the cluster.

In some possible implementations, a working mode of the plurality of optical network switching devices is an active/standby mode or an active-active mode. When the working mode of the plurality of optical network switching devices is the active/standby mode, and an active device is faulty, a standby device may become a new active device, to exchange data between the compute nodes in the subnet of the cluster, and ensure normal running of a service. When the working mode of the plurality of optical network switching devices is the active-active mode, the service unavailability caused by the single point of failure can be avoided, and in addition, load balancing can be implemented.

According to a second aspect, this application provides an optical path establishment system. The system includes an optical network controller and an optical network switching device, where the optical network switching device is configured to exchange data between compute nodes in a cluster.

The optical network controller is configured to obtain a topology structure of a subnet of the cluster, where the topology structure records an address of the compute node in the subnet.

The optical network controller is further configured to: determine a wavelength division configuration based on the topology structure, and provide the wavelength division configuration for the optical network switching device, where the wavelength division configuration includes different wavelengths allocated to the compute nodes in the subnet.

The optical network switching device is configured to establish an optical path between the optical network switching device and the compute node in the subnet based on the wavelength division configuration.

In some possible implementations, the subnet includes N compute nodes, N is greater than 1, and the optical network controller is specifically configured to:
for a target compute node in the N compute nodes, determine a sub-range from a wavelength range, and sample N-1 wavelengths from the sub-range; and
determine the wavelength division configuration based on addresses of N-1 compute nodes other than the target compute node in the subnet, the N-1 wavelengths, egress ports that are of the optical network switching device and that are connected to the N-1 compute nodes, and an ingress port that is of the optical network switching device and that is connected to the target compute node.

In some possible implementations, the optical network switching device is an optical cross-connect OXC switch, and the OXC switch includes a wavelength selective switch.

The optical network switching device is specifically configured to:
establish the optical path between the optical network switching device and the compute node in the subnet by using the wavelength selective switch and based on the wavelength division configuration.

In some possible implementations, an optical network adaptation device is configured for the compute node in the subnet, the optical network adaptation device is configured to access an optical network, and the optical network controller is further configured to:
provide the wavelength division configuration for the optical network adaptation device, to enable the optical network adaptation device to convert an electrical signal into an optical signal with a corresponding wavelength based on the wavelength division configuration.

In some possible implementations, the subnet includes a first compute node and a second compute node.

An optical network adaptation device configured for the first compute node is configured to: convert, based on the wavelength division configuration, an electrical signal to be sent to the second compute node into an optical signal with a corresponding wavelength, and send the optical signal to the optical network switching device.

The optical network switching device is further configured to transmit the optical signal to the second compute node through an optical path between the optical network switching device and the second compute node.

In some possible implementations, the optical network controller is specifically configured to:
provide first configuration information in the wavelength division configuration for the optical network switching device, where the first configuration information includes a correspondence between a wavelength of an optical signal that is allowed to be received by the compute node in the subnet and the ingress port and the egress port of the optical network switching device.

The optical network controller is specifically configured to:
provide second configuration information in the wavelength division configuration for the optical network adaptation device, where the second configuration information includes a correspondence between the address of the compute node in the subnet and the wavelength of the optical signal that is allowed to be received by the compute node in the subnet.

In some possible implementations, the optical network controller is specifically configured to:
receive the topology structure that is of the subnet and that is generated by a job scheduler according to a scheduling policy.

In some possible implementations, the optical network controller is specifically configured to:
receive the topology structure that is of the subnet of the cluster and that is sent by infrastructure as a service IaaS layer network management of a cloud platform.

In some possible implementations, the system includes a plurality of optical network switching devices, and the optical network controller is specifically configured to:
provide the wavelength division configuration for the plurality of optical network switching devices.

In some possible implementations, a working mode of the plurality of optical network switching devices is an active/standby mode or an active-active mode.

According to a third aspect, this application provides an optical network controller. The controller includes at least one processor and at least one storage. The at least one processor and the at least one storage communicate with each other. The at least one processor is configured to execute instructions stored in the at least one storage, to enable the optical network controller to perform a step performed by the optical network controller in the method according to the first aspect.

According to a fourth aspect, this application provides an optical network switching device. The optical network switching device includes at least one processor and at least one storage. The at least one processor and the at least one storage communicate with each other. The at least one processor is configured to execute instructions stored in the at least one storage, to enable the optical network switching device to perform a step performed by the optical network switching device in the method according to the first aspect.

According to a fifth aspect, this application provides a computer-readable storage medium, where the computer-readable storage medium stores instructions, and the instructions are used to perform the optical path establishment method according to any one of the first aspect or the implementations of the first aspect.

According to a sixth aspect, this application provides a computer program product including instructions, where the instructions are used to perform the optical path establishment method according to any one of the first aspect or the implementations of the first aspect.

In this application, based on the implementations according to the foregoing aspects, the implementations may be further combined to provide more implementations.

### BRIEF DESCRIPTION OF DRAWINGS

To describe a technical method in embodiments of this application more clearly, the following briefly describes accompanying drawings for describing embodiments.
FIG. 1A is a schematic diagram of an architecture of a memory interconnection network cluster according to an embodiment of this application;
FIG. 1B is a schematic diagram of a networking mode of a memory interconnection network cluster according to an embodiment of this application;
FIG. 2A is a schematic diagram of an architecture of an optical network according to an embodiment of this application;
FIG. 2B is a schematic diagram of another architecture of an optical network according to an embodiment of this application;
FIG. 2C is a schematic diagram of another architecture of an optical network according to an embodiment of this application;
FIG. 2D is a schematic diagram of another architecture of an optical network according to an embodiment of this application;
FIG. 3A and FIG. 3B are a flowchart of an optical path establishment method according to an embodiment of this application;
FIG. 4 is a schematic diagram of path establishment by an all-optical switch according to an embodiment of this application;
FIG. 5A is a schematic diagram of a structure of a wavelength selective switch according to an embodiment of this application;
FIG. 5B is a schematic diagram of another structure of a wavelength selective switch according to an embodiment of this application;
FIG. 6 is a schematic diagram of wavelength division path selection according to an embodiment of this application;
FIG. 7 is a schematic diagram of a structure of an optical network controller according to an embodiment of this application;
FIG. 8 is a schematic diagram of a structure of an optical network switching device according to an embodiment of this application;
FIG. 9 is a diagram of a hardware structure of an optical network controller according to an embodiment of this application; and
FIG. 10 is a diagram of a hardware structure of an optical network switching device according to an embodiment of this application.

### DESCRIPTION OF EMBODIMENTS

In embodiments of this application, terms "first" and "second" are merely used for a purpose of description, and shall not be understood as an indication or implication of relative importance or implicit indication of a quantity of indicated technical features. Therefore, a feature limited by "first" or "second" may explicitly or implicitly include one or more of the features.

Some technical terms in embodiments of this application are first described.

A data driven computing architecture (Data Driven Architecture), also referred to as a memory centric computing architecture (Memory Centric Architecture) or a hierarchical shared memory (Disaggregated Shared Memory) architecture, is a computing architecture constructing a memory interconnection network (memory fabric) cluster based on a new memory semantic network.

The new memory semantic network includes, but is not limited to, a CXL memory semantic network, a CAPI memory semantic network, or a GenZ memory semantic network. A CXL is an open-source protocol standard, and is used to implement high-speed interconnection between a central processing unit (Central Processing Unit, CPU) and an external device (external device). The protocol standard is compatible with a peripheral component interconnect express (Peripheral Component Interconnect Express, PCIe) protocol standard. As an important acceleration function of a Power processor architecture, a CAPI provides a customizable, efficient, easy-to-use, and CPU load sharing hardware acceleration solution. An implementation carrier of the CAPI may be a field programmable gate array (Field Programmable Gate Array, FPGA). A GenZ is a bus structure protocol. The GenZ uses semantic storage communication to transmit data between memories of different components with smallest overheads. The GenZ not only interconnects storages, but also interconnects a processor and an accelerator. The accelerator can reduce processing pressure of the processor such as a CPU.

The foregoing new memory semantic network supports remote direct memory access (remote direct memory access, RDMA). The RDMA means extending a capability of direct memory access (DMA) to a local host by the external device (such as a network adapter, a video card, a hard disk, and an accelerator) to a capability of direct memory access to a remote host by the external device.

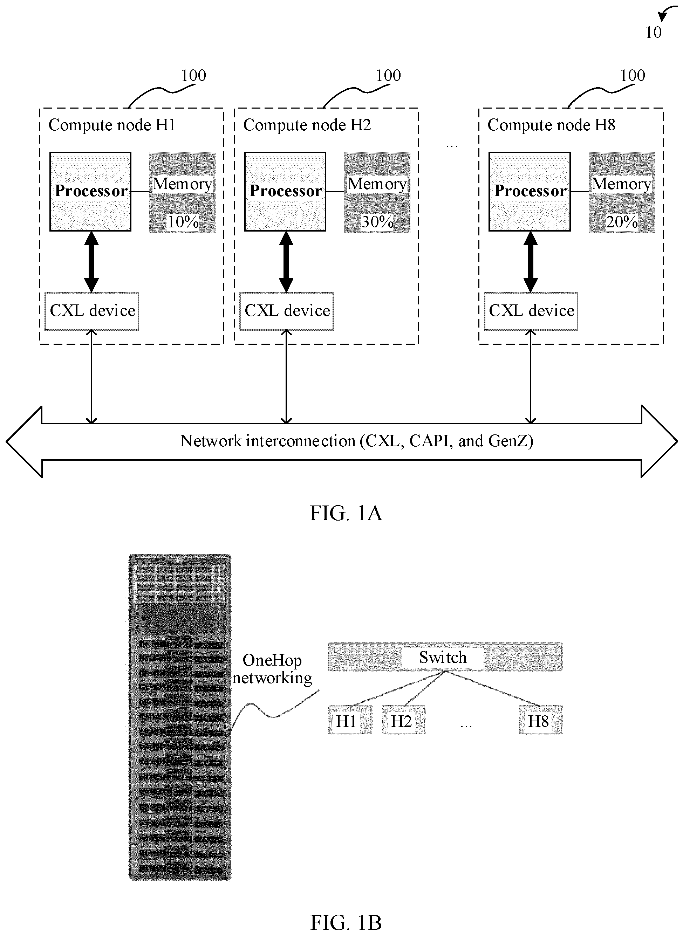

A memory interconnection network cluster may be established by interconnecting a plurality of compute nodes based on the foregoing new memory semantic network. The memory interconnection network cluster may also be briefly referred to as a cluster. FIG. 1A shows a diagram of an architecture of a cluster. The cluster 10 includes a plurality of compute nodes 100, and each compute node 100 includes a processor and a memory. The processor may be a CPU of an X86 architecture or an advanced reduced instruction set computing machine (Advanced RISC Machine, ARM) architecture. The memory may be a double data rate synchronous dynamic random access memory (Double Data Rate Synchronous Dynamic Random Access Memory, DDR SDRAM), where the DDR SDRAM may be briefly referred to as a DDR. Each compute node 100 may be further configured with a network adaptation device, for example, a CXL-based network adaptation device, denoted as a CXL Device. Further, the network adaptation device may further have another function. For example, the network adaptation device may be a network adaptation device based on a data streaming accelerator (data streaming accelerator, DSA), denoted as a DSA Device. The DSA is an external device standard for operating a data stream, and can support scenarios including data movement (which may be combined with deduplication and cyclic redundancy check), data comparison, and data conversion (which may be combined with superimposed data integrity field (Data Integrity Field, DIF) insertion, DIF check, and DIF update).

The CXL Device or the DSA Device may be used as a self-defined hardware bridge (self-defined hardware bridge) to translate CXL.IO, CXL.Mem, CXL.Cache, or the DSA into RDMA network semantics. In this way, a remote memory is directly accessed via a network such as a GenZ network, and therefore hierarchical memory resource pooling and global sharing can be implemented.

The cluster 10 shown in FIG. 1A requires efficient, stable, and reliable cross-node memory access. Specifically, the cluster 10 usually requires an ultra-high bandwidth, and ultra-low average latency and long-tail latency. Considering latency and reliability of a long optical fiber, the cluster 10 may be obtained through networking of a plurality of compute nodes 100 in a single cabinet or a macro cabinet.

Next, refer to a schematic diagram of a networking mode shown in FIG. 1B. The cluster 10 may be established in a OneHop networking manner. Specifically, the plurality of compute nodes 100 (denoted as H1, H2, ..., and H8 in FIG. 1B) are connected to a switch Switch, and H1 to H8 may exchange data via the switch. However, burst incast/outcast traffic (for example, H1 to H7 send the data to H8 at the same time, or H8 returns the data to H1 to H7 at the same time) may trigger short-term congestion, causing a sharp increase of the long-tail latency. Consequently, performance of the cluster 10 is restricted.

In view of this, embodiments of this application provide an optical path establishment method. The method is applied to an optical network. The optical network may be an optical transport network (optical transport network, OTN). The optical transport network is transport network that implements transmission, multiplexing, route selection, and monitoring of a service signal in optical domain, and ensures a performance indicator and survivability of the service signal. In embodiments, the OTN may transmit the service signal through an optical cross connection (optical cross connection, OXC), and the OTN that transmits the service signal through the OXC may also be referred to as an OXC network.

The optical network includes an optical network controller and an optical network switching device. The optical network controller may be a controller that supports the OXC, and is also referred to as an OXC controller. Further, the optical network controller further supports a software-defined network (software-defined network, SDN). For example, the optical network controller may perform centralized management and configuration on a network device such as the optical network switching device through a standardized interface, to implement dynamic division of the cluster, and therefore meet requirements of different services. The optical network switching device may be a switch that supports the OXC, for example, an OXC switch. In some embodiments, the optical network switching device may alternatively be an optical fiber router that supports the OXC.

Specifically, the optical network controller may obtain a topology structure of a subnet of a cluster, where the cluster includes a plurality of compute nodes, and the subnet of the cluster may be a subnet formed by some nodes in the cluster, and is configured to execute a job delivered by an upper-layer service (for example, weather forecast and animation rendering of an area in a coming day). Different subnets may be configured to execute different jobs. The topology structure of the subnet records an address of the compute node in the subnet. Then, the optical network controller may determine a wavelength division configuration based on the topology structure, and provide the wavelength division configuration for the optical network switching device. The wavelength division configuration is used to allocate different wavelengths to the compute nodes in the subnet. Correspondingly, the optical network switching device may establish an optical path between the optical network switching device and the compute node in the subnet based on the wavelength division configuration.

In the method, the optical network switching device establishes optical paths to the different compute nodes in the subnet based on the wavelength division configuration, so that an optical signal can be directly transmitted, after reaching the optical network switching device, to a corresponding compute node through a corresponding optical path selected based on a wavelength of the optical signal. This resolves a congestion problem caused by burst incast traffic or outcast traffic in a conventional switch network, avoids a sharp increase of long-tail latency, and ensures performance of the cluster.

It should be further noted that a physical connection between the optical network switching device and the compute node in the cluster is similar to a physical connection between a conventional switch and a compute node in the OneHop networking manner, so that simple networking is implemented, and the compute node does not need to provide a plurality of egress ports for performing the physical connection as in a full-mesh networking manner. This lowers a networking threshold and improves networking efficiency.

To make the technical solutions of this application clearer and easier to understand, the following describes system architectures in embodiments of this application with reference to the accompanying drawings.

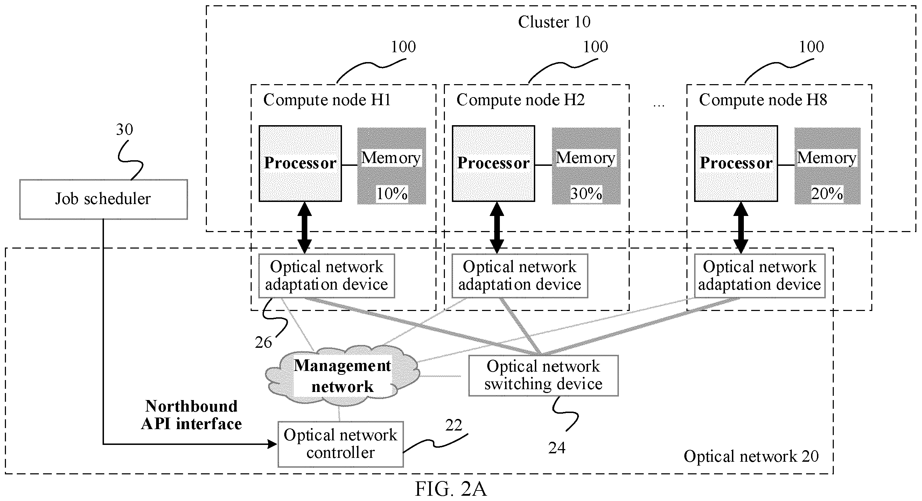

Refer to a diagram of a system architecture of an optical network shown in FIG. 2A. An optical network 20 is separately connected to a service layer at an upper layer (not shown in FIG. 2A) and a cluster 10 at a bottom layer. A service application at the service layer may generate a job. For example, a model training service application may generate a model training job, and a weather forecast service application may generate a weather forecast job. The foregoing job may be scheduled by a job scheduler 30 to the cluster 10 at the bottom layer for execution. The cluster 10 may be divided into different subnets to execute different jobs respectively, to implement job isolation and ensure data security.

Considering job execution efficiency, the job scheduler 30 may split the job into a plurality of tasks (tasks), and then schedule the plurality of tasks to different compute nodes 100 in the subnet. The different compute nodes 100 may execute the tasks in parallel. When executing the task, the different compute nodes 100 in the subnet usually further need to exchange data to complete the job. The model training job is used as an example. It is assumed that there is 12 gigabyte (GigaByte, GB) training data in a training set. In this case, the job scheduler 30 may split the training job into three tasks, and each task is performing model training by using 4 GB training data in the training set. The job scheduler 30 schedules the foregoing three tasks to three compute nodes 100 in the subnet respectively. In each round of a training process, the three compute nodes 100 may further exchange gradients of parameters, and each compute node 100 performs a next round of parameter update based on a gradient of a parameter obtained through calculation by the compute node 100 and a gradient of a parameter obtained through the exchange.

The optical network 20 is configured to establish an optical path between the optical network 20 and the compute node 100 in the subnet, to directly transmit data to a corresponding compute node 100 in a form of an optical signal. This resolves a problem that burst traffic in a conventional switch network causes congestion and further affects performance of the cluster 10.

In this embodiment, the optical network 20 includes an optical network controller 22 and an optical network switching device 24. Further, the optical network 20 may further include an optical network adaptation device 26. The optical network controller 22 is configured to: configure and manage network devices such as the optical network switching device 24 and the optical network adaptation device 26, to implement optical signal transmission. The optical network switching device 24 is configured to exchange the data between the compute nodes 100 in the cluster 10. The optical network adaptation device 26 may be generally configured on a side of the compute node 100, for example, assembled on a mainboard of the compute node 100. The optical network adaptation device 26 is configured to: connect the compute node 100 to the optical network 20, to implement high-speed communication between the compute nodes 100 via the optical network 20.

The optical network controller 22 may be an OXC controller, the optical network switching device 24 may be an optical network switch, for example, an OXC switch, and the optical network adaptation device 26 may be an optical network adapter, for example, an OXC network adapter. In some embodiments, the optical network switching device 24 may alternatively be another device, for example, an optical fiber router, and the optical network adaptation device 26 may alternatively be another device configured to access the optical network 20.

Specifically, the optical network controller 22 is configured to obtain a topology structure of the subnet of the cluster 10. The topology structure records an address of the compute node 100 in the subnet. Then, the optical network controller 22 is further configured to: determine a wavelength division configuration based on the topology structure, and provide the wavelength division configuration for the optical network switching device 24. The wavelength division configuration is used to allocate different wavelengths to the compute nodes in the subnet. For example, the wavelength division configuration may include a correspondence between the address of the compute node 100 in the subnet, a wavelength of an optical signal that is allowed to be received by the compute node 100 in the subnet, and an ingress port and an egress port of the optical network switching device 24. It should be noted that the optical network controller 22 may provide the wavelength division configuration for the optical network switching device 24 based on a management network. The management network is configured to: transmit control signaling, to configure the optical network switching device 24. In some embodiments, the management network may be an Ethernet.

The optical network switching device 24 is configured to establish an optical path between the optical network switching device 24 and the compute node 100 in the subnet based on the wavelength division configuration. The optical path is used to transmit, from the egress port to the compute node 100 in the subnet, an optical signal that is with a corresponding wavelength and that is received by the ingress port. The optical network adaptation device 26 configured for the compute node 100 in the subnet is configured to: convert a received optical signal into an electrical signal, and provide the electrical signal for the compute node 100, to implement data exchange.

It should be noted that, in FIG. 2A, an example in which the cluster 10 is a high-performance computing (High-performance computing, HPC) cluster is used for description. The HPC cluster is a cluster that connects a plurality of compute nodes 100 by using various interconnection technologies, to process a large-scale computing problem by using a comprehensive computing capability obtained by connecting the plurality of compute nodes 100. Industries such as scientific researches, weather forecast, simulation experiments, biopharmacy, gene sequencing, and image processing can use the HPC cluster to resolve large-scale computing problems.

Specifically, refer to FIG. 2A. The job scheduler 30 is disposed in the HPC cluster. When receiving a job, the job scheduler 30 may obtain a scheduling policy of the ob. For example, the scheduling policy may be a priority scheduling policy or a backfill scheduling policy. The job scheduler 30 may determine the topology structure of the subnet of the cluster according to the scheduling policy, to subsequently schedule the job to a corresponding subnet for execution. The job scheduler 30 may invoke a northbound application programming interface (application programming interface, API) of the optical network controller 22, and deliver the topology structure of the subnet to the optical network controller 22, so that the optical network controller 22 can obtain the topology structure of the subnet.

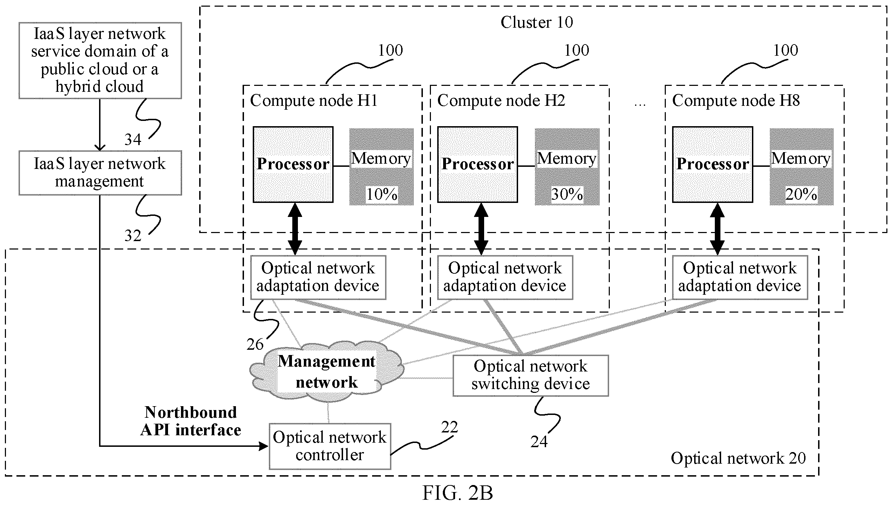

In some other possible implementations, the optical network 20 may be further connected to a cloud service provided by a cloud platform, to process a job of the cloud platform. Refer to a diagram of another system architecture of an optical network shown in FIG. 2B. As shown in FIG. 2B, the optical network 20 includes an optical network controller 22, an optical network switching device 24, and an optical network adaptation device 26. Different from that in FIG. 2A, the optical network controller 22 in FIG. 2B may receive a topology structure that is of a subnet of a cluster 10 and that is sent by infrastructure as a service (Infrastructure as a Service, IaaS) layer network management 32 (for example, OpenStack Neutron) of a cloud platform, to implement cloud servicization of an HPC cluster. The cloud platform may be a public cloud or a hybrid cloud. The hybrid cloud is a cloud platform that combines a private cloud (local infrastructure) and the public cloud.

During specific implementation, the IaaS layer network management 32 may provide a management plane (also referred to as a control plane), and the management plane is configured to: transmit control signaling to the optical network controller 22, to manage the optical network switching device 24 and the optical network adaptation device 26. The IaaS layer network management 32 is connected to an IaaS layer network service domain 34 of the cloud platform.

An IaaS layer provides computing, storage, and network services by using infrastructure. The network service includes, but is not limited to, a virtual private cloud (virtual private cloud, VPC), an elastic IP (Elastic IP, EIP), network address translation (network address translation, NAT), elastic load balance (elastic load balance, ELB), or direct connect (direct connect, DC). Each of the foregoing network services may be usually deployed on a plurality of servers, to form the IaaS layer network service domain 34. When a user triggers an operation through an operation interface of the cloud platform, for example, triggers an operation of accessing a database, a client generates an operation request in response to the operation of the user, where the operation request may be a hypertext transfer protocol (Hypertext Transfer Protocol, HTTP) request. The operation request may first reach the IaaS layer network service domain 34, and is sent to the IaaS layer network management 32 after being correspondingly processed by the IaaS layer network service domain 34. After receiving the foregoing request, the IaaS layer network management 32 may determine, based on the request, the topology structure that is of the subnet of the cluster 10 and that is used to process the foregoing request, and then send the topology structure of the subnet to the optical network controller 22, so that the optical network controller 22 configures and manages the optical network switching device 24 and the optical network adaptation device 26 based on the topology structure of the subnet. For specific implementation of configuring and managing the optical network switching device 24 and the optical network adaptation device 26 by the optical network controller 22 based on the topology structure of the subnet, refer to related content descriptions of the embodiment shown in FIG. 2A, and details are not described herein again.

In this scenario, an overall architecture of a bottom layer of the optical network 20 does not need to be changed, and only a small amount of adaptation needs to be added to the IaaS layer network management 32, for example, adaptation to a northbound API of the optical network controller 22, so that the optical network controller 22 can be smoothly connected to an IaaS network service layer of the public cloud/hybrid cloud.

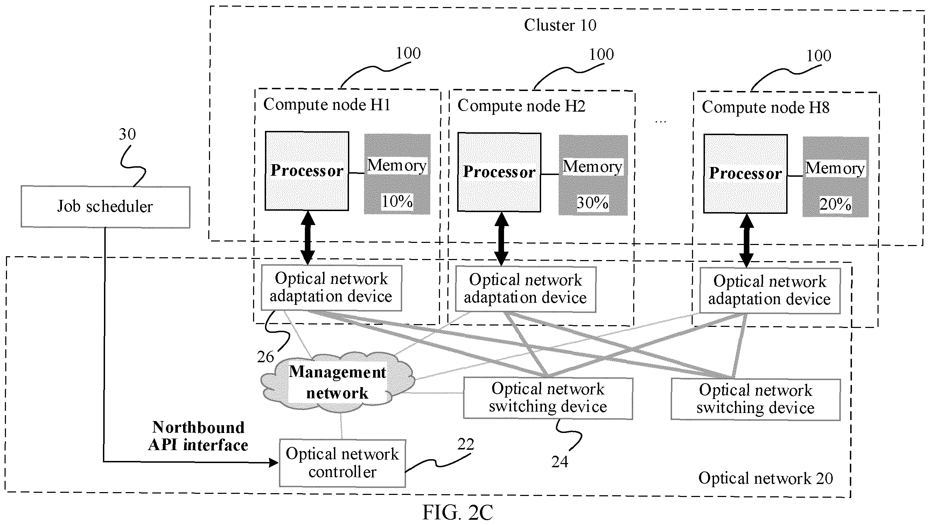

In some other possible implementations, refer to a schematic diagram of an architecture of an optical network shown in FIG. 2C. When a cluster 10 has an extremely high availability requirement, the optical network 20 may include a plurality of optical network switching devices 24, and a compute node 100 in the cluster 10 is connected to the plurality of optical network switching devices 24, so that the compute node 100 is connected to a plurality of optical network planes at the same time. When providing a wavelength division configuration for the optical network switching device 24, an optical network controller 22 may provide the wavelength division configuration for all the foregoing plurality of optical network switching devices 24.

A working mode of the plurality of optical network switching devices 24 may be an active/standby mode or an active-active mode. The active/standby mode means that some devices in a plurality of devices (for example, the plurality of optical network switching devices 24) are set as active devices, and the other devices are set as standby devices. When the active device breaks down, the standby device is set as the active device to provide a service. The active-active mode means that a plurality of devices provide the service at the same time. In the active-active mode, data synchronization may be further performed between the plurality of devices (for example, the plurality of optical network switching devices 24).

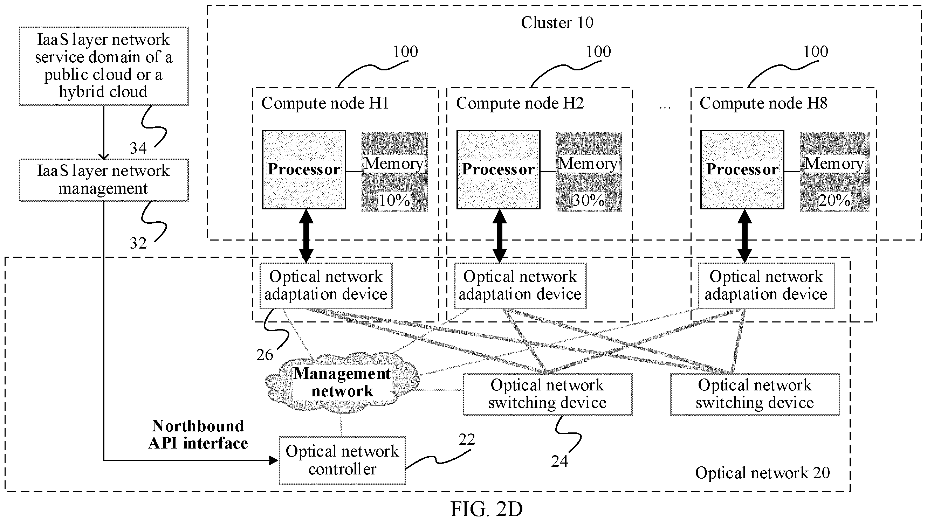

FIG. 2C uses an example in which the compute node 100 in an HPC cluster is connected to two optical network switching devices 24 for description. In some possible implementations, the compute node 100 may be connected to more optical network switching devices 24, to ensure availability. Further, refer to a schematic diagram of another architecture of an optical network 20 shown in FIG. 2D. When an optical network controller 22 is connected to IaaS layer network management 32, a compute node in a cluster 10 may also be connected to a plurality of optical network switching devices 24, to ensure availability of a cloud service.

FIG. 2A to FIG. 2D describe the architectures of the optical network 20 in embodiments of this application. The following uses the architecture shown in FIG. 2A as an example to describe an optical path establishment method in embodiments of this application.

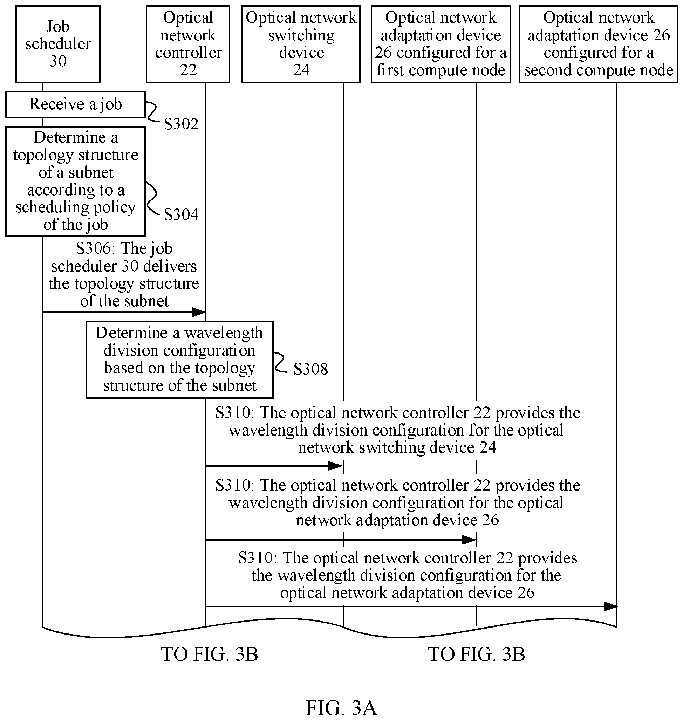

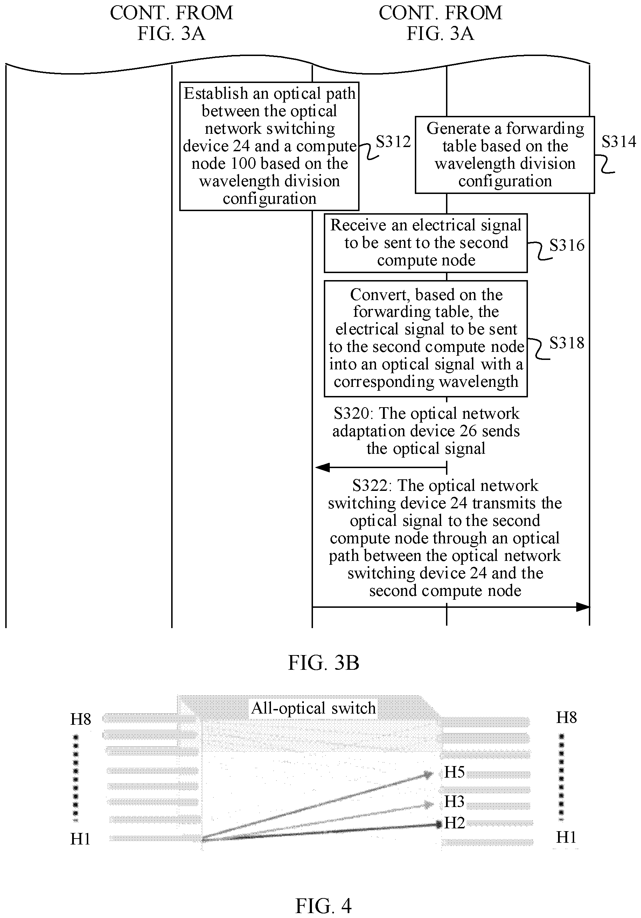

Refer to an interaction flowchart of an optical path establishment method shown in FIG. 3A and FIG. 3B. The method includes the following steps.

S302: A job scheduler 30 receives a job.

The job scheduler 30 is specifically configured to schedule the job to a suitable compute node 100 based on distribution and usage of resources such as compute nodes 100 in a cluster 10, to improve job execution efficiency and resource utilization. The job scheduler 30 usually has a workload management function and a resource management function. For example, the job scheduler 30 may include a workload manager (workload manager) and a resource manager (resource manager). The resource manager is configured to collect resource usage information, and the workload manager is configured to schedule a workload including the job to a suitable compute node 100 based on the resource usage information. In some embodiments, the workload manager may further monitor a running status of the job on the compute node 100, to schedule the job based on the running status. The running status of the job may be represented by using at least one of an execution progress and expected remaining execution time.

The job scheduler 30 in this embodiment may be an open-source scheduler. For example, the job scheduler 30 may be an open-source Openlava scheduler or a Slurm scheduler. In some embodiments, the job scheduler 30 may alternatively be a scheduler purchased by a user or developed by a user. For example, the job scheduler 30 may be a TORQUE scheduler or a Moab Cluster Suite scheduler.

The job scheduler 30 may receive a job submitted by a client (for example, a client of a service application). Specifically, the client may provide an operation interface. After the user triggers an operation on the operation interface, for example, an operation of accessing a database, a job may be generated, where the job is specifically querying data that meets a query condition in the database. Then, the client may submit the job. Correspondingly, the job scheduler 30 may receive the foregoing job submitted by the client. It should be noted that the job scheduler 30 may further create a job queue, and then add the received job submitted by the client to the job queue, to manage the job based on the job queue.

S304: The job scheduler 30 determines a topology structure of a subnet based on scheduling of the job.

Specifically, the job scheduler 30 is configured with a scheduling policy of the job. The scheduling policy may be referred to as a scheduling algorithm. In this embodiment, the scheduling policy configured for the job scheduler 30 may be a job priority scheduling policy or a backfill scheduling policy. The following separately describes different scheduling policies.

The job priority scheduling policy means starting the job based on a job priority sequence. A job with a high priority is scheduled first, and a job with a low priority is scheduled later. A job priority may be set when the job is created. The job priority may be measured by a priority value. Priority values of different jobs may be the same. When a plurality of jobs submitted to the job scheduler 30 have a same priority value, a final priority of each job may be determined based on receiving time of the job scheduler 30. When different jobs have the same priority value, a job that the job scheduler 30 receives first has a high priority.

The backfill scheduling policy means allowing, without delaying estimated start time of the job with the high priority, the job with the low priority to run first. The job with the low priority may run on a resource (for example, the compute node 100) reserved for the job with the high priority. Running time of a backfill running job (for example, the foregoing job with the low priority) usually needs to be limited.

Specifically, the job scheduler 30 may determine, according to the job scheduling policy, a node configured to execute the job. Nodes that execute the job may form a subnet, and subnets that execute different jobs may be logically isolated. In this way, the job scheduler 30 can obtain the topology structure of the subnet. The topology structure records an address of the compute node 100 in the subnet.

The address of the compute node 100 is unique, and the address may be an internet protocol (Internet protocol, IP) address. In some embodiments, the address of the compute node 100 may alternatively be another address, for example, a media access control (media access control, MAC) address. Further, the topology structure further records a connection relationship of the compute node 100. The connection relationship may be a connection relationship between the compute node 100 and an ingress port or an egress port of an optical network switching device 24.

In some possible implementations, the topology structure of the subnet may be represented by using a graph structure. A vertex (vertex) in the graph structure may represent the compute node 100 in the subnet, and an edge (edge) in the graph structure may represent the connection relationship of the compute node 100. For example, an edge 1 is included between a vertex 1 and a vertex 2, and the edge 1 represents a connection relationship between a compute node 100 corresponding to the vertex 1, a compute node 100 corresponding to the vertex 2, and ports on the optical network switching device 24. The system architecture in FIG. 2A is used as an example for description. The compute node 100 corresponding to the vertex 1 may be H1, and the compute node corresponding to the vertex 2 may be H2. The edge 1 represents that H1 is connected to an ingress port 1 of the optical network switching device 24 and that H2 is connected to an egress port 3 of the optical network switching device 24.

In some possible implementations, the topology structure of the subnet may alternatively be represented by using a data table. The data table may include a plurality of records, and each record may include the following fields: a subnet identifier, the address of the compute node 100, the ingress port, and the egress port, to represent a compute node 100 included in a subnet and an ingress port or an egress port connected to the compute node 100. Further, each record may further include a node identifier of the compute node 100. It should be noted that, in one record, the ingress port or the egress port may also be null or a default value.

For ease of understanding, the following provides descriptions with reference to a specific example. Refer to Table 1. Table 1 shows the topology structure of the subnet.

**Table 1 Topology structure of a subnet**

| Subnet identifier | Node identifier | IP address | Ingress port | Egress port |
|---|---|---|---|---|
| Subnet001 | H1 | 125.10.23.27 | Ingress port 1 | Egress port 2 |
| Subnet001 | H2 | 203.31.16.54 | Ingress port 4 | Egress port 3 |
| Subnet001 | H3 | 198.65.43.75 | Ingress port 5 | Egress port 1 |
| Subnet001 | H5 | 205.29.89.32 | Ingress port 7 | Egress port 5 |

In some possible implementations, the topology structure of the subnet may further record a label of the subnet. The label may be used for filtering or query. For example, the label may identify a service identifier or a service type of a service processed by the subnet.

S306: The job scheduler 30 delivers the topology structure of the subnet to an optical network controller 22.

Specifically, the optical network controller 22 may provide a northbound API. The northbound API is an interface provided upwards, for example, an interface provided for an upper-layer service application, and an objective of the northbound API is to enable the service application to conveniently invoke a network resource and capability at a bottom layer. In contrast, a southbound API is an interface provided downwards, for example, an interface for managing network management or a device of another vendor.

The job scheduler 30 may globally control a resource status of the cluster 10 through the northbound API, and uniformly schedule the job based on the resource status. During specific implementation, the job scheduler 30 may invoke the northbound API to deliver the topology structure of the subnet to the optical network controller 22, to uniformly schedule the job based on the topology structure of the subnet.

S308: The optical network controller 22 determines a wavelength division configuration based on the topology structure of the subnet.

Specifically, the subnet includes N compute nodes 100, and N is a positive integer greater than 1. For a target compute node in the N compute nodes 100, the optical network controller 22 may determine a sub-range from a wavelength range, sample N-1 wavelengths from the sub-range, and then determine the wavelength division configuration based on addresses of N-1 compute nodes 100 other than the target compute node in the subnet, the N-1 wavelengths, egress ports that are of the optical network switching device 24 and that are connected to the N-1 compute nodes, and an ingress port that is of the optical network switching device 26 and that is connected to the target compute node, where the target compute node may be any compute node 100 in the N compute nodes 100.

The wavelength range may be a range of wavelengths that can be used, for example, a wavelength range of visible light. The optical network controller 22 may determine, in a sampling manner, a sub-range corresponding to the target compute node from the wavelength range. In this way, the optical network controller 22 may determine N sub-ranges. To avoid signal interference, the N sub-ranges usually do not overlap. The optical network controller 22 may sample N-1 wavelengths from each of the N sub-ranges. In this way, the optical network controller 22 may determine N*(N-1) wavelengths.

When determining the sub-range from the range, the optical network controller 22 may use an average sampling manner or a random sampling manner. For example, the optical network controller 22 may divide the range into N segments to obtain the N sub-ranges. Each of the N sub-ranges represents a value range of a wavelength of an optical signal that can be sent by one compute node 100 in the subnet. Similarly, when determining N-1 wavelengths from each sub-range, the optical network controller 22 may also use the average sampling manner or the random sampling manner. For example, the optical network controller 22 may divide the sub-range into N-1 segments, and obtain a left endpoint, a middle point, or a right endpoint of each segment in the N-1 segments, to obtain the N-1 wavelengths. The N-1 wavelengths are respectively used as wavelengths of optical signals sent by the remaining N-1 compute nodes 100 in the subnet.

For ease of understanding, the following provides descriptions with reference to an example.

A wavelength of the visible light is usually between 780 and 400 nanometers (nanometers, nm). It is assumed that the subnet includes four compute nodes 100, which are specifically H1, H2, H3, and H5. In this case, the optical network control 22 may divide the wavelength into the following four segments: 780 nm to 685 nm, 685 nm to 590 nm, 590 nm to 495 nm, and 495 nm to 400 nm. The foregoing range includes a left endpoint, but does not include a right endpoint. Then, the optical network control node 22 may select three values from each wavelength segment, to implement wavelength division. For example, values are selected from 780 nm to 685 nm. The optical network controller 22 may select three values, which are respectively 750 nm, 720 nm, and 690 nm. In this case, when H1 separately sends data to H2, H3, and H5, wavelengths of optical signals that are obtained through conversion from electrical signals carrying the data are 750 nm, 720 nm, and 690 nm.

After the wavelength division is completed, the optical network controller 22 may determine the wavelength division configuration. The wavelength division configuration includes a correspondence between the address of the compute node 100 in the subnet, a wavelength of an optical signal that is allowed to be received by the compute node 100 in the subnet, and the ingress port and the egress port of the optical network switching device 24.

The topology structure of the subnet records the ingress port and the egress port that are connected to the compute node 100. Based on this, the optical network controller 22 may determine a correspondence between the address of the compute node 100 in the subnet, the wavelength of the optical signal that is allowed to be received by the compute node 100 in the subnet, and the ingress port and the egress port of the optical network switching device 24 based on a correspondence between the address of the compute node 100 in the subnet and the wavelength of the optical signal that is allowed to be received by the compute node 100 in the subnet, and the ingress port and the egress port that are connected to the compute node 100 and that are in the topology structure, to obtain the wavelength division configuration.

S310: The optical network controller 22 provides the wavelength division configuration for the optical network switching device 24 and an optical network adaptation device 26.

During specific implementation, the optical network controller 22 may provide first configuration information in the wavelength division configuration for the optical network switching device 24, where the first configuration information includes the correspondence between the wavelength of the optical signal that is allowed to be received by the compute node 100 in the subnet and the ingress port and the egress port of the optical network switching device 24; and provide second configuration information in the wavelength division configuration for the optical network adaptation device 26, where the second configuration information includes the correspondence between the address of the compute node 100 in the subnet and the wavelength of the optical signal that is allowed to be received by the compute node 100 in the subnet. This can reduce transmission overheads of the optical network controller 22, the optical network switching device 24, and the optical network adaptation device 26.

In some possible implementations, the optical network controller 22 may not distinguish the optical network switching device 24 from the optical network adaptation device 26, and provide a complete correspondence in a unified manner. To be specific, the optical network controller 22 may provide the optical network switching device 24 and the optical network adaptation device 26 with the correspondence between the address of the compute node 100 in the subnet, the wavelength of the optical signal that is allowed to be received by the compute node 100 in the subnet, and the ingress port and the egress port of the optical network switching device 24.

The optical network controller 22 may provide the wavelength division configuration for the optical network switching device 24 and the optical network adaptation device 26 in a plurality of implementations. In an implementation, the optical network controller 22 actively delivers the wavelength division configuration to the optical network switching device 24 and the optical network adaptation device 26. In another implementation, the optical network controller 22 returns, in response to a configuration obtaining request of the optical network switching device 24 and the optical network adaptation device 26, the wavelength division configuration to the optical network switching device 24 and the optical network adaptation device 26.

It should be noted that the optical network controller 22 may alternatively not directly transmit the wavelength division configuration to the optical network switching device 24 and the optical network adaptation device 26. For example, the optical network controller 22 may provide the wavelength division configuration for the optical network switching device 24 and the optical network adaptation device 26 in a manner of sharing the wavelength division configuration.

S312: The optical network switching device 24 establishes an optical path between the optical network switching device 24 and the compute node 100 in the subnet based on the wavelength division configuration.

Specifically, the optical network switching device 24 may establish a corresponding optical path based on a correspondence between a wavelength and an ingress port and an egress port in the wavelength division configuration. The optical path is used to transmit, from the egress port to the compute node 100 in the subnet, an optical signal that is with a corresponding wavelength and that is received by the ingress port. In this embodiment, the optical network switching device 24 may establish a plurality of different optical paths. The different optical paths are used to transmit optical signals with different wavelengths to different compute nodes 100.

Refer to a schematic diagram of path establishment by an all-optical switch shown in FIG. 4. In this example, an optical network switching device 24 is an OXC switch, the OXC switch is an all-optical switch, and a source port is a source port that receives data from H1. When destination ports are respectively ports that send data to H2, H3, and H5, optical paths for transmitting optical signals with wavelengths λ1, λ2, and λ3 may be established respectively.

The following describes a principle of establishing an optical path by an OXC switch (all-optical switch).

The OXC switch may include a wavelength selective switch (Wavelength Selective Switch, WSS). The switch may be a matrix optical switch with N*N ports. The OXC switch may establish a path based on the wavelength division configuration and by using the WSS.

The WSS may be classified into a microelectromechanical system (Microelectromechanical System, MEMS)-based WSS and a liquid crystal on silicon (Liquid Crystal on Silicon, LCoS)-based WSS. The following separately describes principles of the foregoing WSSs.

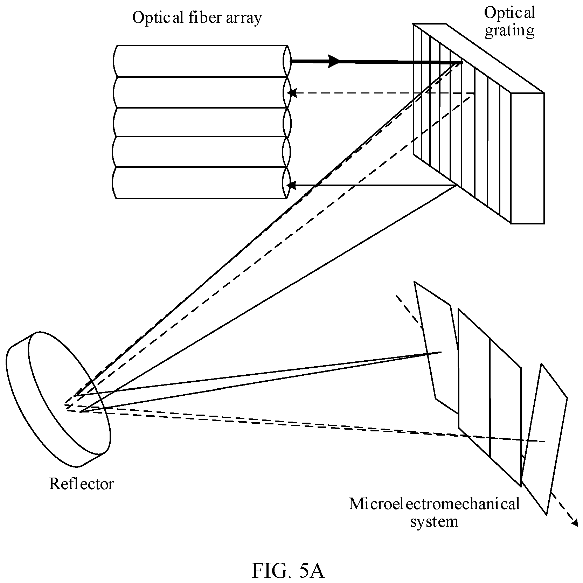

Refer to a schematic diagram of a structure of a MEMS-based WSS shown in FIG. 5A. The MEMS-based WSS includes an optical fiber array, an optical grating, a MEMS, and a reflector. The optical fiber array includes an ingress port (that is, an input optical fiber port) and an egress port (that is, an output optical fiber port). An optical signal received by the ingress port may be a wavelength division multiplexing signal, and wavelength separation may be implemented when the wavelength division multiplexing signal passes through the optical grating. In this example, it is assumed that optical signals with two wavelengths are obtained through separation, and the optical signals with the two wavelengths are reflected by the reflector, and reach different mirrors in the MEMS. Angles of the different mirrors in the MEMS are adjusted, so that the optical signals with the two wavelengths can be reflected to a specific egress port of the optical fiber array by using the reflector.

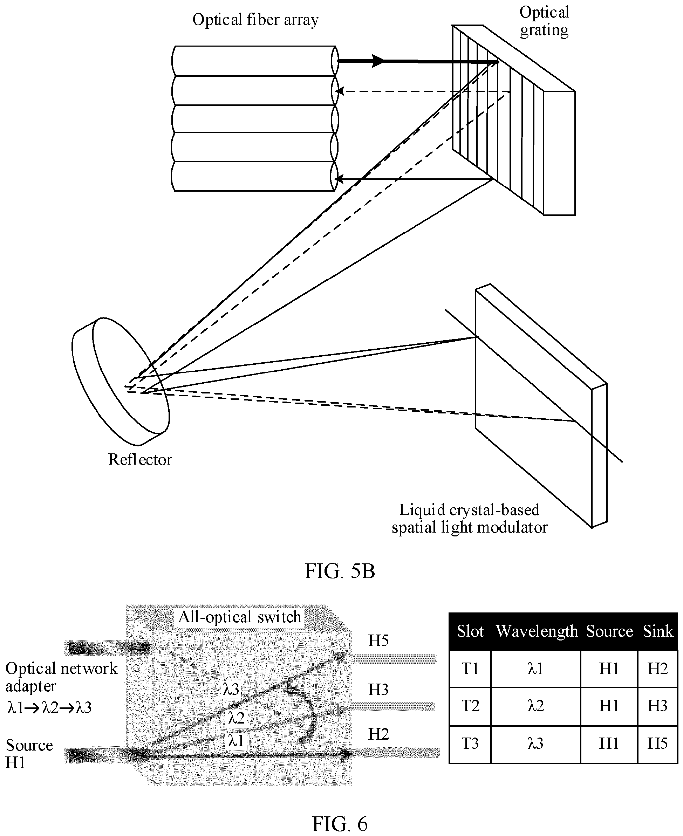

Next, refer to a schematic diagram of a structure of an LCoS-based WSS shown in FIG. 5B. The LCoS-based WSS includes an optical fiber array, an optical grating, a liquid crystal-based spatial light modulator (phased array LC-based switch), and a reflector. Specifically, when a wavelength division multiplexed optical signal passes through the optical grating, optical signals with all wavelengths may be demultiplexed based on different positions in space, to obtain optical signals with different wavelengths. Different from the MEMS-based WSS that changes a direction of an optical signal with a wavelength in real time by controlling an angle of a mirror to implement optical path adjustment, the LCoS-based WSS changes a phase of an optical signal with a wavelength by using the liquid crystal-based spatial light modulator to implement optical path adjustment.

Based on this, the optical network controller 22 may establish, based on the correspondence between the wavelength and the ingress port and the egress port and by using the WSS switch, an optical path for switching an optical signal with a specific wavelength from a specified ingress port to a specified egress port.

S314: The optical network adaptation device 26 generates a forwarding table based on the wavelength division configuration.

Specifically, the wavelength division configuration includes the correspondence between the address of the compute node 100 in the subnet and the wavelength of the optical signal that is allowed to be received by the compute node 100 in the subnet. The optical network adaptation device 26 may generate, based on the correspondence between the address of the compute node 100 and the wavelength of the optical signal that is allowed to be received by the compute node 100, the forwarding table that uses the address of the compute node 100 as an index. The address of the compute node 100 may be an IP address. Correspondingly, each entry in the forwarding table may include the IP address and a wavelength corresponding to the IP address. Further, the optical network adaptation device 26 may store the forwarding table, to subsequently perform signal conversion based on the forwarding table.

For ease of understanding, FIG. 4 is still used as an example for description. The optical network adaptation device 26 may generate the forwarding table based on the wavelength division configuration, where the forwarding table includes a correspondence between addresses of H2, H3, and H5 and wavelengths of optical signals that are allowed to be received by H2, H3, and H5. The optical network adaptation device 26 may store the forwarding table, to subsequently perform optical and electrical conversion of a signal based on the forwarding table.

It should be noted that S312 and S314 may be performed concurrently, or may be performed sequentially in a specified order. The execution order does not affect specific implementation of this embodiment of this application. This is not limited in this embodiment. Further, S314 may not be performed in the method in this embodiment of this application. For example, the optical network adaptation device 26 may perform subsequent processing based on the wavelength division configuration provided by the optical network controller 22.

S316: An optical network adaptation device 26 configured for a first compute node receives an electrical signal to be sent to a second compute node.

The first compute node and the second compute node are different compute nodes 100 in the subnet, and data exchange may be performed between the compute nodes 100 to complete a job. For example, gradient values may be exchanged between the compute nodes 100 to complete a model training job.

The first compute node and the second compute node may exchange data in a packet form. Specifically, a CPU of the first compute node may generate a packet, where the packet is in an electrical signal form; and then the CPU of the first compute node may send the packet in the electrical signal form to the optical network adaptation device 26 configured for the first compute node.

S318: The optical network adaptation device 26 configured for the first compute node converts, based on the forwarding table, the electrical signal to be sent to the second compute node into an optical signal with a corresponding wavelength.

The packet in the electrical signal form records a source address and a destination address. In this embodiment, the source address may be an address of the first compute node, and the destination address may be an address of the second compute node. The optical network adaptation device 26 configured for the first compute node may query the forwarding table based on the address of the second compute node, to obtain a wavelength of an optical signal that is allowed to be received by the second compute node; and then convert the electrical signal into the optical signal with the corresponding wavelength.

The optical network adaptation device 26 includes an optical and electrical conversion module. After determining the wavelength of the optical signal that is allowed to be received by the second compute node, the optical network adaptation device 26 converts the electrical signal into the optical signal with the corresponding wavelength by using the optical and electrical conversion module.

S320: The optical network adaptation device 26 configured for the first compute node sends the optical signal to the optical network switching device 24.

The optical network adaptation device 26 configured for the first compute node may send the optical signal to the optical network switching device 24 through a path between the first compute node and the optical network switching device 24.

S322: The optical network switching device 24 transmits the optical signal to the second compute node through an optical path between the optical network switching device 24 and the second compute node.

Specifically, the optical network switching device 24 may determine an egress port based on a correspondence between the wavelength of the optical signal that is allowed to be received by the second compute node and the ingress port and the egress port of the optical network switching device 24, the wavelength of the optical signal, and an ingress port that receives the optical signal, and then transmit the optical signal to the second compute node through an optical path between the egress port and the second compute node. That is, the optical network switching device 24 may transmit the optical signal to the second compute node in a wavelength division path selection manner, and a network adaptation device configured for the second compute node may convert the optical signal into the electrical signal by using the optical and electrical conversion module, to transmit the packet to the second compute node.

For ease of understanding, an embodiment of this application further provides an example for description. Refer to a schematic diagram of wavelength division path selection shown in FIG. 6. When the optical network adaptation device 26 generates optical signals with wavelengths λ1, λ2, and λ3, and the optical network switching device 24 receives the optical signals with the wavelengths λ1, λ2, and λ3 respectively in slots T1, T2, and T3, the optical network switching device 24 may select a corresponding optical path in a wavelength division path selection manner, to transmit the optical signals to corresponding compute nodes. For example, in the slot T1, the optical network switching device 24 (for example, the OXC switch) receives the optical signal with the wavelength λ1 that is sent by H1, determines a corresponding optical path based on the wavelength and an ingress port, and transmits the optical signal to H2 through the optical path.

In the method, the optical network controller 22 divides the wavelength based on the topology structure of the subnet, and delivers the wavelength division configuration to the optical network switching device 24 and the optical network adaptation device 26, so that the optical network adaptation device 26 can convert packets reaching different compute nodes 100 into optical signals with different wavelengths. The optical network switching device 24 distinguishes between the optical signals based on the wavelengths, and directly transmits the optical signals to corresponding compute nodes 100 through a pre-established optical path. This avoids a congestion problem caused by burst incast traffic or outcast traffic in a conventional switch network, shortens long-tail latency, and ensures performance of the cluster 10.

In addition, the optical network switching device 24 may establish an optical path between the optical network switching device 24 and a specific compute node 100 (which is specifically the compute node 100 in the subnet) based on the wavelength division configuration. This implements flexible scheduling of the cluster 10 and can flexibly meet different requirements of services.

It should be noted that the embodiment shown in FIG. 3A and FIG. 3B is described by using the system architecture shown in FIG. 2A as an example. In the system architecture shown in FIG. 2B, the optical network controller 22 may also be connected to IaaS layer network management 32 of a public cloud or a hybrid cloud, to implement cloud servicization of a memory interconnection network cluster such as the cluster 10. Specifically, IaaS layer network service domain 34 of the public cloud or the hybrid cloud may generate a job. For example, the IaaS layer network service domain 34 may generate a job in response to an operation of a user, and the IaaS layer network management 32 may determine the topology structure of the subnet based on distribution and usage of resources in the cluster 10, and then deliver the topology structure of the subnet to the optical network controller 22 through the northbound API of the optical network controller 22. Then, the optical network controller 22 determines the wavelength division configuration based on the topology structure, and provides the wavelength division configuration for the optical network switching device 24, and the optical network switching device 24 establishes an optical path between the optical network switching device 24 and the compute node 100 in the subnet based on the wavelength division configuration, to subsequently transmit an optical signal to the compute node 100 in the subnet through the optical path. For specific implementations in which the optical network controller 22 determines the wavelength division configuration and the optical network switching device 24 establishes the optical path, refer to related content descriptions shown in FIG. 3A and FIG. 3B. Details are not described herein again. In this method, cloud servicization is performed on the cluster 10. This can improve utilization of a resource (such as a computing resource) in the cluster 10, and reduce costs.

Further, as shown in FIG. 2C or FIG. 2D, the compute node 100 may be connected to a plurality of optical network switching devices 24, and a working mode of the plurality of optical network switching devices 24 is an active/standby mode or an active-active mode. The optical network controller 22 may provide the wavelength division configuration for the plurality of optical network switching devices 24. This avoids network interruption caused by a single point of failure of the optical network switching device 24, and improves availability of the cluster 10.

Based on the optical path establishment method provided in embodiments of this application, an embodiment of this application further provides an optical path establishment system. The optical path establishment system may be a hardware system, and the hardware system may include the optical network controller 22 and the optical network switching device 24 shown in FIG. 2A to FIG. 2D. Further, the hardware system may include the optical network adaptation device 26 shown in FIG. 2A to FIG. 2D. In other words, the optical path establishment system may be the optical network 20 shown in FIG. 2A to FIG. 2D.

Refer to schematic diagrams of structures of the optical network 20 shown in FIG. 2A to FIG. 2D. The optical network 20 includes the optical network controller 22 and the optical network switching device 24, and the optical network switching device 24 is configured to exchange data between compute nodes 100 in a cluster 10.

The optical network controller 22 is configured to obtain a topology structure of a subnet of the cluster 10, where the topology structure records an address of a compute node 100 in the subnet;
the optical network controller 24 is further configured to: determine a wavelength division configuration based on the topology structure, and provide the wavelength division configuration for the optical network switching device 24, where the wavelength division configuration includes different wavelengths allocated to the compute nodes in the subnet; and
the optical network switching device 24 is configured to establish an optical path between the optical network switching device 24 and the compute node 100 in the subnet based on the wavelength division configuration.

In some possible implementations, the subnet includes N compute nodes, N is greater than 1, and the optical network controller 22 is specifically configured to:
for a target compute node in the N compute nodes, determine a sub-range from a wavelength range, and sample N-1 wavelengths from the sub-range; and
determine the wavelength division configuration based on addresses of N-1 compute nodes other than the target compute node in the subnet, the N-1 wavelengths, egress ports that are of the optical network switching device and that are connected to the N-1 compute nodes 100, and an ingress port that is of the optical network switching device 24 and that is connected to the target compute node.

In some possible implementations, the optical network switching device 24 is an optical cross-connect OXC switch, and the OXC switch includes a wavelength selective switch; and
the optical network switching device 24 is specifically configured to:
establish the optical path between the optical network switching device 24 and the compute node 100 in the subnet by using the wavelength selective switch and based on the wavelength division configuration.

In some possible implementations, an optical network adaptation device 26 is configured for the compute node 100 in the subnet, the optical network adaptation device 26 is configured to access the optical network 20, and the optical network controller 22 is further configured to:
provide the wavelength division configuration for the optical network adaptation device 26, to enable the optical network adaptation device 26 to convert an electrical signal into an optical signal with a corresponding wavelength based on the wavelength division configuration.

In some possible implementations, the subnet includes a first compute node and a second compute node;
an optical network adaptation device 26 configured for the first compute node is configured to: convert, based on the wavelength division configuration, an electrical signal to be sent to the second compute node into an optical signal with a corresponding wavelength, and send the optical signal to the optical network switching device 24; and
the optical network switching device 24 is further configured to transmit the optical signal to the second compute node through an optical path between the optical network switching device 24 and the second compute node.

In some possible implementations, the optical network controller 22 is specifically configured to:
provide first configuration information in the wavelength division configuration for the optical network switching device, where the first configuration information includes a correspondence between a wavelength of an optical signal that is allowed to be received by the compute node in the subnet and the ingress port and the egress port of the optical network switching device; and
the optical network controller 22 is specifically configured to:
   provide second configuration information in the wavelength division configuration for the optical network adaptation device, where the second configuration information includes a correspondence between the address of the compute node in the subnet and the wavelength of the optical signal that is allowed to be received by the compute node in the subnet.

In some possible implementations, the optical network controller 22 is specifically configured to:
receive the topology structure that is of the subnet and that is generated by a job scheduler according to a scheduling policy.

In some possible implementations, the optical network controller 22 is specifically configured to:
receive the topology structure that is of the subnet of the cluster and that is sent by infrastructure as a service IaaS layer network management of a cloud platform.

In some possible implementations, the optical network 20 includes a plurality of optical network switching devices 24, and the optical network controller 22 is specifically configured to:
provide the wavelength division configuration for the plurality of optical network switching devices 24.

In some possible implementations, a working mode of the plurality of optical network switching devices 24 is an active/standby mode or an active-active mode.

The optical network 20 according to this embodiment of this application may correspondingly perform the methods described in embodiments of this application, and the foregoing and other operations and/or functions of components of the optical network 20 are separately used to implement corresponding procedures of the methods in the embodiment shown in FIG. 3A and FIG. 3B. For brevity, details are not described herein again.

Based on the optical path establishment method and system in embodiments of this application, embodiments of this application further provide an optical network controller 22 and an optical network switching device 24. The following first describes the optical network controller 22 and the optical network switching device 24 in embodiments of this application from a perspective of function modularization.

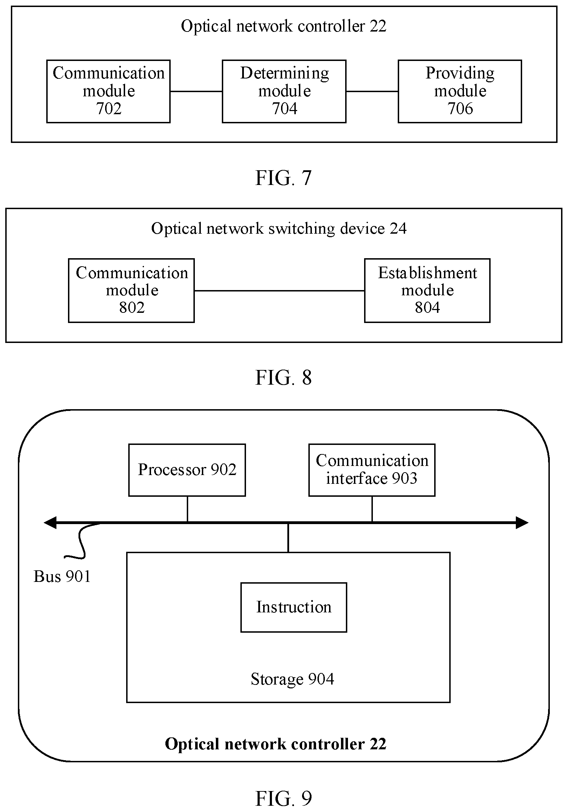

Refer to a schematic diagram of a structure of an optical network controller 22 shown in FIG. 7. The optical network controller 22 includes:
a communication module 702, configured to obtain a topology structure of a subnet of a cluster, where the topology structure records an address of a compute node in the subnet;
a determining module 704, configured to determine a wavelength division configuration based on the topology structure; and
a providing module 706, configured to provide the wavelength division configuration for the optical network switching device 24, where the wavelength division configuration is used to allocate different wavelengths to compute nodes 100 in the subnet, so that the optical network switching device 24 establishes an optical path between the optical network switching device 24 and the compute node 100 in the subnet based on the wavelength division configuration.

In some possible implementations, the subnet includes N compute nodes, N is greater than 1, and the determining module 704 is configured to:
for a target compute node in the N compute nodes, determine a sub-range from a wavelength range, and sample N-1 wavelengths from the sub-range; and
determine the wavelength division configuration based on addresses of N-1 compute nodes other than the target compute node in the subnet, the N-1 wavelengths, egress ports that are of the optical network switching device and that are connected to the N-1 compute nodes 100, and an ingress port that is of the optical network switching device 24 and that is connected to the target compute node.

In some possible implementations, an optical network adaptation device 26 is configured for the compute node 100 in the subnet, the optical network adaptation device 26 is configured to access an optical network 20, and the providing module 706 is further configured to:
provide the wavelength division configuration for the optical network adaptation device 26, to enable the optical network adaptation device 26 to convert an electrical signal into an optical signal with a corresponding wavelength based on the wavelength division configuration.

In some possible implementations, the providing module 706 is specifically configured to:
provide first configuration information in the wavelength division configuration for the optical network switching device, where the first configuration information includes a correspondence between a wavelength of an optical signal that is allowed to be received by the compute node in the subnet and the ingress port and the egress port of the optical network switching device; and
provide second configuration information in the wavelength division configuration for the optical network adaptation device, where the second configuration information includes a correspondence between the address of the compute node in the subnet and the wavelength of the optical signal that is allowed to be received by the compute node in the subnet.

In some possible implementations, the communication module 702 is specifically configured to:
receive the topology structure that is of the subnet and that is generated by a job scheduler 30 according to a scheduling policy.

In some possible implementations, the communication module 702 is specifically configured to:
receive the topology structure that is of the subnet of a cluster 10 and that is sent by infrastructure as a service IaaS layer network management of a cloud platform.

In some possible implementations, the optical network 20 includes a plurality of optical network switching devices 24, and the providing module 706 is specifically configured to:
provide the wavelength division configuration for the plurality of optical network switching devices 24.

In some possible implementations, a working mode of the plurality of optical network switching devices 24 is an active/standby mode or an active-active mode.

The optical network controller 22 according to this embodiment of this application may correspondingly perform the methods described in embodiments of this application, and the foregoing and other operations and/or functions of the modules of the optical network controller 22 are separately used to implement the steps performed by the optical network controller 22 in the embodiment shown in FIG. 3A and FIG. 3B. For brevity, details are not described herein again.

Next, refer to a schematic diagram of a structure of an optical network switching device 24 shown in FIG. 8. The optical network switching device 24 includes:
a communication module 802, configured to obtain a wavelength division configuration, where the wavelength division configuration is used to allocate different wavelengths to compute nodes 100 in the subnet; and
an establishment module 804, configured to establish an optical path between the optical network switching device 24 and the compute node 100 in the subnet based on the wavelength division configuration.

In some possible implementations, the optical network switching device 24 is an optical cross-connect OXC switch, and the OXC switch includes a wavelength selective switch; and
the establishment module 804 is specifically configured to:
establish the optical path between the optical network switching device 24 and the compute node 100 in the subnet by using the wavelength selective switch and based on the wavelength division configuration.

In some possible implementations, the subnet includes a first compute node and a second compute node; and
the communication module 802 is further configured to: receive an optical signal sent by an optical network adaptation device 26 configured for the first compute node, where the optical signal is obtained through conversion from an electrical signal to be sent to the second compute node by the optical network adaptation device 26 based on the wavelength division configuration, and then transmit the optical signal to the second compute node through an optical path between the optical network switching device 24 and the second compute node.

The optical network switching device 24 according to this embodiment of this application may correspondingly perform the methods described in embodiments of this application, and the foregoing and other operations and/or functions of the modules of the optical network switching device 24 are separately used to implement the steps performed by the optical network switching device 24 in the embodiment shown in FIG. 3A and FIG. 3B. For brevity, details are not described herein again.

FIG. 7 and FIG. 8 describe the optical network controller 22 and the optical network switching device 24 in embodiments of this application from a perspective of function modularization. The following describes the optical network controller 22 and the optical network switching device 24 in embodiments of this application from a perspective of hardware materialization.

FIG. 9 provides a schematic diagram of a structure of an optical network controller 22. As shown in FIG. 9, the optical network controller 22 includes a bus 901, a processor 902, a communication interface 903, and a storage 904. The processor 902, the storage 904, and the communication interface 903 communicate with each other by using the bus 901.

The bus 901 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used in FIG. 9 for representation, but it does not indicate that there is only one bus or only one type of bus.

The processor 902 may be any one or more of processors, such as a central processing unit (central processing unit, CPU), a graphics processing unit (graphics processing unit, GPU), a microprocessor (microprocessor, MP), or a digital signal processor (digital signal processor, DSP).

The communication interface 903 is configured to communicate with the outside. For example, the communication interface 903 is configured to obtain a topology structure of a subnet of a cluster 10, or provide a wavelength division configuration for an optical network switching device 24.

The storage 904 may include a volatile memory (volatile memory), for example, a random access memory (random access memory, RAM). The storage 904 may further include a non-volatile memory (non-volatile memory), for example, a read-only memory (read-only memory, ROM), a flash memory, a hard disk drive (hard disk drive, HDD), or a solid state drive (solid state drive, SSD).

The storage 904 stores computer-readable instructions, and the processor 902 executes the computer-readable instructions, to enable the optical network controller 22 to perform the steps performed by the optical network controller 22 in the foregoing optical path establishment method.

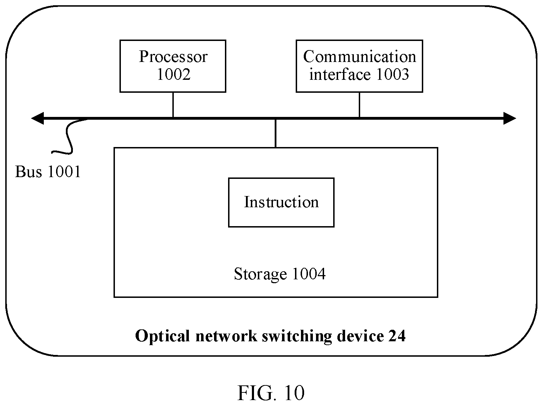

Next, refer to a schematic diagram of a structure of an optical network switching device 24 shown in FIG. 10. As shown in FIG. 10, the optical network switching device 24 includes a bus 1001, a processor 1002, a communication interface 1003, and a storage 1004. The processor 1002, the storage 1004, and the communication interface 1003 communicate with each other by using the bus 1001.

The storage 1004 stores computer-readable instructions, and the processor 1002 executes the computer-readable instructions, to enable the optical network switching device 24 to perform the steps performed by the optical network switching device 24 in the foregoing optical path establishment method.

An embodiment of this application further provides a computer-readable storage medium. The computer-readable storage medium may be any usable medium that can be stored by an optical network controller 22 or the optical network switching device 24, or a data storage device such as a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the optical network controller 22 or the optical network switching device 24 to perform the steps performed by the optical network controller 22 or the optical network switching device 24 in the foregoing method.

An embodiment of this application further provides a computer program product. The computer program product includes one or more computer instructions. When the computer instructions are loaded and executed on the optical network controller 22 or the optical network switching device 24, all or some of the procedures or functions according to embodiments of this application are generated. The computer instructions may be stored in a computer-readable storage medium or may be transmitted from a computer-readable storage medium to another computer-readable storage medium. For example, the computer instructions may be transmitted from a website, computing device or data center to another website, computing device or data center in a wired (for example, a coaxial cable, an optical fiber, or a digital subscriber line (DSL)) or wireless (for example, infrared, radio, or microwave) manner. The computer program product may be a software installation package. When any method of the foregoing optical path establishment methods needs to be used, the computer program product may be downloaded and executed on the optical network controller 22 or the optical network switching device 24.

Descriptions of procedures or structures corresponding to the foregoing accompanying drawings have different emphasis. For a part not described in detail in a procedure or structure, refer to related descriptions of other procedures or structures.

## Claims

1. An optical path establishment method, applied to an optical network, wherein the optical network comprises an optical network controller and an optical network switching device, the optical network switching device is configured to exchange data between compute nodes in a cluster, and the method comprises:
obtaining, by the optical network controller, a topology structure of a subnet of the cluster, wherein the topology structure records an address of the compute node in the subnet;
determining, by the optical network controller, a wavelength division configuration based on the topology structure, and providing the wavelength division configuration for the optical network switching device, wherein the wavelength division configuration comprises different wavelengths allocated to the compute nodes in the subnet; and
establishing, by the optical network switching device, an optical path between the optical network switching device and the compute node in the subnet based on the wavelength division configuration.

2. The method according to claim 1, wherein the subnet comprises N compute nodes, N is greater than 1, and the determining, by the optical network controller, a wavelength division configuration based on the topology structure comprises:
for a target compute node in the N compute nodes, determining, by the optical network controller, a sub-range from a wavelength range, and sampling N-1 wavelengths from the sub-range; and
determining, by the optical network controller, the wavelength division configuration based on addresses of N-1 compute nodes other than the target compute node in the subnet, the N-1 wavelengths, egress ports that are of the optical network switching device and that are connected to the N-1 compute nodes, and an ingress port that is of the optical network switching device and that is connected to the target compute node.

3. The method according to claim 1 or 2, wherein the optical network switching device is an optical cross-connect OXC switch, and the OXC switch comprises a wavelength selective switch, wherein
the establishing, by the optical network switching device, an optical path between the optical network switching device and the compute node in the subnet based on the wavelength division configuration comprises:
establishing, by the optical network switching device, the optical path between the optical network switching device and the compute node in the subnet by using the wavelength selective switch and based on the wavelength division configuration.

4. The method according to any one of claims 1 to 3, wherein an optical network adaptation device is configured for the compute node in the subnet, the optical network adaptation device is configured to access the optical network, and the method further comprises:
providing, by the optical network controller, the wavelength division configuration for the optical network adaptation device, to enable the optical network adaptation device to convert an electrical signal into an optical signal with a corresponding wavelength based on the wavelength division configuration.

5. The method according to claim 4, wherein the subnet comprises a first compute node and a second compute node, and the method further comprises:
converting, based on the wavelength division configuration by an optical network adaptation device configured for the first compute node, an electrical signal to be sent to the second compute node into an optical signal with a corresponding wavelength, and sending the optical signal to the optical network switching device; and
transmitting, by the optical network switching device, the optical signal to the second compute node through an optical path between the optical network switching device and the second compute node.

6. The method according to claim 4, wherein the providing, by the optical network controller, the wavelength division configuration for the optical network switching device comprises:
providing, by the optical network controller, first configuration information in the wavelength division configuration for the optical network switching device, wherein the first configuration information comprises a correspondence between a wavelength of an optical signal that is allowed to be received by the compute node in the subnet and the ingress port and the egress port of the optical network switching device; and
the providing, by the optical network controller, the wavelength division configuration for the optical network adaptation device comprises:
providing, by the optical network controller, second configuration information in the wavelength division configuration for the optical network adaptation device, wherein the second configuration information comprises a correspondence between the address of the compute node in the subnet and the wavelength of the optical signal that is allowed to be received by the compute node in the subnet.

7. The method according to any one of claims 1 to 6, wherein the obtaining, by the optical network controller, a topology structure of a subnet of the cluster comprises:
receiving, by the optical network controller, the topology structure that is of the subnet and that is generated by a job scheduler according to a scheduling policy.

8. The method according to any one of claims 1 to 6, wherein the obtaining, by the optical network controller, a topology structure of a subnet of the cluster comprises:
receiving, by the optical network controller, the topology structure that is of the subnet of the cluster and that is sent by infrastructure as a service IaaS layer network management of a cloud platform.

9. The method according to any one of claims 1 to 8, wherein the optical network comprises a plurality of optical network switching devices, and the providing, by the optical network controller, the wavelength division configuration for the optical network switching device comprises:
providing, by the optical network controller, the wavelength division configuration for the plurality of optical network switching devices.

10. The method according to claim 9, wherein a working mode of the plurality of optical network switching devices is an active/standby mode or an active-active mode.

11. An optical path establishment system, wherein the system comprises an optical network controller and an optical network switching device, and the optical network switching device is configured to exchange data between compute nodes in a cluster, wherein
the optical network controller is configured to obtain a topology structure of a subnet of the cluster, wherein the topology structure records an address of the compute node in the subnet;
the optical network controller is further configured to: determine a wavelength division configuration based on the topology structure, and provide the wavelength division configuration for the optical network switching device, wherein the wavelength division configuration comprises different wavelengths allocated to the compute nodes in the subnet; and
the optical network switching device is configured to establish an optical path between the optical network switching device and the compute node in the subnet based on the wavelength division configuration.

12. The system according to claim 11, wherein the subnet comprises N compute nodes, N is greater than 1, and the optical network controller is specifically configured to:
for a target compute node in the N compute nodes, determine a sub-range from a wavelength range, and sample N-1 wavelengths from the sub-range; and
determine the wavelength division configuration based on addresses of N-1 compute nodes other than the target compute node in the subnet, the N-1 wavelengths, egress ports that are of the optical network switching device and that are connected to the N-1 compute nodes, and an ingress port that is of the optical network switching device and that is connected to the target compute node.

13. The system according to claim 11 or 12, wherein the optical network switching device is an optical cross-connect OXC switch, and the OXC switch comprises a wavelength selective switch, wherein
the optical network switching device is specifically configured to:
establish the optical path between the optical network switching device and the compute node in the subnet by using the wavelength selective switch and based on the wavelength division configuration.

14. The system according to any one of claims 11 to 13, wherein an optical network adaptation device is configured for the compute node in the subnet, the optical network adaptation device is configured to access an optical network, and the optical network controller is further configured to:
provide the wavelength division configuration for the optical network adaptation device, to enable the optical network adaptation device to convert an electrical signal into an optical signal with a corresponding wavelength based on the wavelength division configuration.

15. The system according to claim 14, wherein the subnet comprises a first compute node and a second compute node, wherein
an optical network adaptation device configured for the first compute node is configured to: convert, based on the wavelength division configuration, an electrical signal to be sent to the second compute node into an optical signal with a corresponding wavelength, and send the optical signal to the optical network switching device; and
the optical network switching device is further configured to transmit the optical signal to the second compute node through an optical path between the optical network switching device and the second compute node.

16. The system according to claim 14, wherein the optical network controller is specifically configured to:
provide first configuration information in the wavelength division configuration for the optical network switching device, wherein the first configuration information comprises a correspondence between a wavelength of an optical signal that is allowed to be received by the compute node in the subnet and the ingress port and the egress port of the optical network switching device; and
provide second configuration information in the wavelength division configuration for the optical network adaptation device, wherein the second configuration information comprises a correspondence between the address of the compute node in the subnet and the wavelength of the optical signal that is allowed to be received by the compute node in the subnet.

17. The system according to any one of claims 11 to 16, wherein the optical network controller is specifically configured to:
receive the topology structure that is of the subnet and that is generated by a job scheduler according to a scheduling policy.

18. The system according to any one of claims 11 to 16, wherein the optical network controller is specifically configured to:
receive the topology structure that is of the subnet of the cluster and that is sent by infrastructure as a service IaaS layer network management of a cloud platform.

19. The system according to any one of claims 11 to 18, wherein the system comprises a plurality of optical network switching devices, and the optical network controller is specifically configured to:
provide the wavelength division configuration for the plurality of optical network switching devices.

20. The system according to claim 19, wherein a working mode of the plurality of optical network switching devices is an active/standby mode or an active-active mode.

21. An optical network controller, wherein the optical network controller comprises a processor and a storage, and the storage stores computer-readable instructions; and the processor executes the computer-readable instructions, to enable the optical network controller to perform a step performed by the optical network controller in the method according to any one of claims 1 to 10.

22. An optical network switching device, wherein the optical network switching device comprises a processor and a storage, and the storage stores computer-readable instructions; and the processor executes the computer-readable instructions, to enable the optical network switching device to perform a step performed by the optical network switching device in the method according to any one of claims 1 to 10.

23. A computer-readable storage medium, comprising computer-readable instructions, wherein the computer-readable instructions are used to implement the method according to any one of claims 1 to 10.

24. A computer program product, comprising computer-readable instructions, wherein the computer-readable instructions are used to implement the method according to any one of claims 1 to 10.
